(19) Europäisches Patentamt

European Patent Office

Office européen des brevets

(11) Veröffentlichungsnummer: **0 557 329 B1**

(12) ## EUROPÄISCHE PATENTSCHRIFT

(45) Veröffentlichungstag der Patentschrift: **17.05.95**

(21) Anmeldenummer: **91919537.0**

(22) Anmeldetag: **07.11.91**

(86) Internationale Anmeldenummer:
**PCT/EP91/02108**

(87) Internationale Veröffentlichungsnummer:
**WO 92/08629 (29.05.92 92/12)**

(51) Int. Cl.⁶: **B60T 8/00**

(54) **SCHALTUNGSANORDNUNG FÜR EIN ANTRIEBSSCHLUPFREGELUNGSSYSTEM MIT BREMSEN- UND/ODER MOTOREINGRIFF.**

(30) Priorität: **17.11.90 DE 4036742**

(43) Veröffentlichungstag der Anmeldung:
**01.09.93 Patentblatt 93/35**

(45) Bekanntmachung des Hinweises auf die
Patenterteilung:
**17.05.95 Patentblatt 95/20**

(84) Benannte Vertragsstaaten:
**DE ES FR GB IT**

(56) Entgegenhaltungen:
**EP-A- 293 561**
**WO-A-89/04783**
**DE-A- 3 618 867**

(73) Patentinhaber: **ITT Automotive Europe GmbH**
**Guerickestrasse 7**
**D-60488 Frankfurt am Main (DE)**

(72) Erfinder: **LATARNIK, Michael**
**Römerstrasse 7**
**D-6382 Friedrichsdorf 4 (DE)**
Erfinder: **KOLBE, Alexander**
**Am Gänsepfad 24**
**D-6112 Gross Zimmern (DE)**
Erfinder: **HONUS, Klaus**
**Antoninusstrasse 25**
**D-6000 Frankfurt/Main 50 (DE)**

## Beschreibung

Die Erfindung bezieht sich auf eine Schaltungsanordnung zur Aufrechterhaltung oder Verbesserung der Regelfunktion bei Montage eines kleineren Ersatzrades anstelle eines angetriebenen Normalrades, für ein Antriebsschlupfregelungssystem mit Bremsen- und/oder Motoreingriff für Kraftfahrzeuge, bei dem zur Ermittlung des Antriebsschlupfes die Drehgeschwindigkeit der angetriebenen Räder mit der Fahrzeuggeschwindigkeit oder einer entsprechenden Meßgröße verglichen wird, bei dem aus den bei stabilem Raddrehverhalten gemessenen Drehgeschwindigkeiten ein Korrekturfaktor gewonnen wird und bei dem die Antriebsschlupfregelung ausgelöst wird, wenn der Radschlupf einen vorgegebenen Grenzwert, nämlich die sogenannte Schlupfschwelle, überschreitet. Aus dem Dokument WO 89/04783 ist ein Regelverfahren bekannt, wobei der Korrekturfaktor aus den Differenzen aller Radgeschwindigkeiten und durch Mittelwertbildung berechnet wird.

Schaltungsanordnungen für Antriebsschlupfregelungssysteme sind bekannt. Die für die Regelung benötigten Informationen werden vor allem durch Radsensoren gewonnen, wobei der Vergleich des Drehverhaltens der einzelnen Räder und die Unterscheidung in angetriebene und nicht angetriebene Räder wichtige Aufschlüsse gibt.

Der Ersatz eines Normalrades durch eines der heute vielfach verwendeten Noträder, die häufig in ihren Abmessungen erheblich von den Normalrädern abweichen, führt daher zu Fehlinformationen für die Antriebsschlupfregelung. Kritisch ist vor allem der Ersatz eines angetriebenen Rades durch ein Notrad, dessen Durchmesser geringer ist als der Durchmesser des Normalrades. Die durch den geringeren Durchmesser bedingte höhere Drehgeschwindigkeit des Notrades wird von der Aptriebsschlupfregelung als "Antriebsschlupf" gewertet, weshalb das Regelungsystem anspricht und Bremsdruck in die Radbremse des Notrades einsteuert. In manchen Situationen, z.B. bei unterschiedlichem Reibbeiwert rechts/links, wenn sich das Notrad zudem noch auf der Seite des höheren Reibbeiwertes befindet, kann durch diese Bremsdruckeinsteuerung das Anfahren vollständig verhindert werden. Um dies zu vermeiden, mußte bisher die Antriebsschlupfregelung bei Montage eines Notrades abgeschaltet werden.

Der Erfindung liegt daher die Aufgabe zu Grunde, diese Nachteile der Verwendung von Noträdern bei Fahrzeugen mit Antriebsschlupfregelung zu überwinden.

Es hat sich nun gezeigt, daß diese Aufgabe mit einer Schaltungsanordnung der eingangs genannten Art gelöst werden kann, bei der der Korrekturfaktor durch achsweisen Vergleich der Drehgeschwindigkeiten der beiden Räder einer Achse und Vergleich der an der angetriebenen Achse und an der nichtangetriebenen Achse gemessenen Drehzahldifferenzen ermittelt wird und bei der die an dem Ersatzrad gemessene Drehgeschwindigkeit durch den Korrekturfaktor bewertet und dadurch dem Drehgeschwindigkeitsmeßwert des zweiten angetriebenen Rades derselben Achse derart angepaßt wird, daß für das Ersatzrad die gleiche Schlupfschwelle für die Antriebsschlupfregelung maßgebend wird wie für ein Normalrad.

Eine Verbesserung der Regelung auf diese Art funktioniert dann, wenn beim Anfahren oder in einer bestimmten Phase zunächst die Antriebsschlupfregelung noch nicht aktiviert ist und daher der Regelung genügend Zeit zur Ermittlung des Korrekturfaktors und entsprechende Anpassung verbleibt. Wenn jedoch beim Anfahren, z.B. auf sehr glatter Fahrbahn, sofort die Antriebsschlupfregelung aktiviert wird, tritt eine Variante der erfindungsgemäßen Schaltungsanordnung in Funktion. Nach dieser ist beim Einsetzen der Antriebsschlupfregelung zunächst für die Regelung der beiden angetriebenen Räder die gleiche Schlupfschwelle maßgebend, worauf dann, wenn während eines Antriebsschlupfregelungsvorganges über eine vorgegebene Zeitspanne hinaus an einem angetriebenen Rad die Druckabbausignale ausbleiben, die Schlupfschwelle solange angehoben wird, bis der Druckabbau einsetzt. Erfolgt während einer Zeitspanne in der Größenordnung von 200 bis 500 ms nur Bremsdruckabbau, ist dies ein Hinweis, daß der Antriebsschlupfregelungsvorgang beendet ist. Daraufhin wird die Schlupfschwelle wieder schrittweise oder kontinuierlich auf die normale Schlupfschwelle erniedrigt. Gleichzeitig kann nun wieder in der zuvor beschriebenen Weise ein Korrekturfaktor ermittelt werden, mit dem die Drehgeschwindigkeit des schnelleren, nämlich des kleineren Notrades bewertet wird.

Schließlich ist noch eine weitere Variante der erfindungsgemäßen Schaltungsanordnung für den Fall vorgesehen, daß während eines Anfahrvorganges unterschiedlicher Reibbeiwert links/rechts herrscht, ein Rad instabil wird und sich das kleinere Ersatzrad auf der Seite höheren Reibbeiwertes befindet. In dieser Situation wird erfindungsgemäß zur Aufrechterhaltung oder Verbesserung der Regelfunktion die für das Ersatzrad maßgebliche Schlupfschwelle bis zu dem Betrag der Abweichung der Drehgeschwindigkeit dieses Ersatzrades von der Drehgeschwindigkeit der nichtangetriebenen Normalräder angehoben. Die Anhebung erfolgt dabei mit vorgegebener, auf etwa 0,6... 0,8 g begrenzter Steigung.

In den Unteransprüchen sind zweckmäßige Ausgestaltungen der erfindungsgemäßen Schaltungsanordnung beschrieben.

Weitere Merkmale, Vorteile und Anwendungsmöglichkeit der Erfindung gehen aus der folgenden Beschreibung von Ausführungs- und Situationsbeispielen an Hand der beigefügten Abbildungen hervor.

Es zeigen im Diagramm über der Zeit

Fig. 1    den Geschwindigkeitsverlauf der Fahrzeugräder während eines Anfahrvorganges, bei dem die Antriebsschlupfregelung nicht aktiviert ist,

Fig. 2    den Geschwindigkeitsverlauf der Fahrzeugräder während eines Antriebsschlupfregelungsvorganges und bei einem Übergang von beidseitig niedrigem Reibbeiwert auf beidseitig hohen Reibbeiwert, und

Fig. 3    den Geschwindigkeitsverlauf der Fahrzeugräder bei einem Anfahrvorgang und unterschiedlichem Reibbeiwert links/rechts ($\mu$-split).

Allen Abbildungen bzw. Diagrammen liegen Messungen an einem Kraftfahrzeug mit einer angetriebenen und einer nicht angetriebenen Achse zu Grunde. Jedes Rad ist mit einem individuellen Radsensor ausgerüstet. Es handelt sich in allen Fällen um ein Antriebsschlupfregelungssystem mit Bremseneingriff, das erforderlichenfalls noch durch einen Motoreingriff ergänzt werden kann. In allen Fällen wurde anstelle eines angetriebenen Normalrades ein Ersatzrad montiert, dessen Durchmesser nur etwa 80 % des Normalrad-Durchmessers betrug. Nur in solchen Fällen, d.h. bei Montage eines wesentlich kleineren Ersatzrades an der angetriebenen Achse, ergeben sich derart schwerwiegende Auswirkungen auf eine Antriebsschlupfregelung, daß man bisher gezwungen war, die Regelung außer Funktion zu setzen.

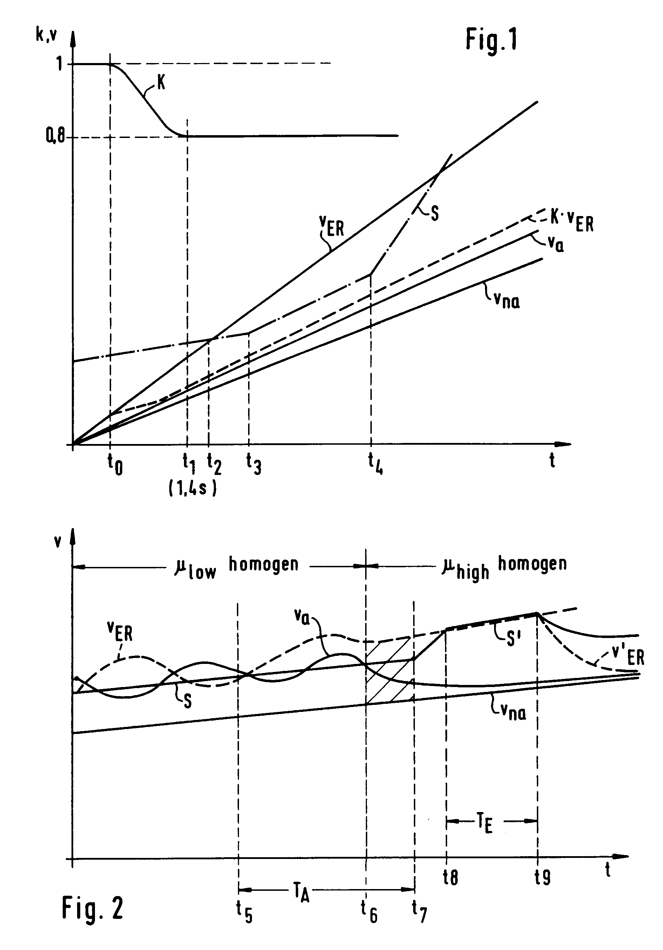

In Figur 1 ist zum einen die Geschwindigkeit eines nicht angetriebenen Rades $v_{na1}$ oder $v_{na2}$ wiedergegeben, die bei einem Anfahrvorgang, da der Schlupf praktisch null ist, der Fahrzeuggeschwindigkeit entspricht. Zum anderen sind die Geschwindigkeit des angetriebenen Normalrades $v_a$ und die Geschwindigkeit des Ersatzrades $v_{ER}$ dargestellt. Schließlich ist in Figur 1 die bewertete bzw. korrigierte Geschwindigkeit des Ersatzrades $K(t) \cdot v_{ER}$ eingetragen. Außer diesen Radgeschwindigkeiten ist in Figur 1 der Verlauf des Korrekturfaktors $K(t)$ bei einem solchen Anfahrvorgang, bei dem die Antriebsschlupfregelung nicht aktiviert ist, wiedergegeben.

Ferner ist in Figur 1 der Verlauf der sogenannten "Schlupfschwelle" S mit einer strichpunktierten Linie angegeben. Im vorliegenden Ausführungsbeispiel beginnt die Schlupfschwelle S, um das Anfahren zu erleichtern, bei einem relativ hohen Schlupfwert von beispielsweise 6 km/h, nimmt dann kontinuierlich auf etwa 3 km/h ab. Dieser Wert wird hier

zum Zeitpunkt $t_3$, an dem die Geschwindigkeit des anfahrenden Fahrzeuges auf etwa 20 km/h gestiegen ist, erreicht. Anschließend bleibt die Schlupfschwelle bis zum Zeitpunkt $t_4$, an dem die Fahrzeuggeschwindigkeit bereits 60 km/h beträgt konstant, um danach weiter anzusteigen. Der optimale Verlauf der Schlupfschwelle ist abhängig vom jeweiligen Fahrzeugtyp.

Der Anpassungsprozeß bzw. die Korrektur der an dem Ersatzrad gemessenen Geschwindigkeit $v_{ER}$ beginnt zum Zeitpunkt t und ist zum Zeitpunkt $t_1$, im vorliegenden Beispiel nach 1,4 Sekunden, praktisch abgeschlossen. Dieser "Lernprozeß" setzt voraus, daß während des Anfahrens die Antriebsschlupfregelung für eine ausreichende Zeitspanne inaktiviert bleibt. Durch achsweisen Vergleich der Geschwindigkeiten an den angetriebenen und an den nicht angetriebenen Rädern nach der Beziehung

$$\Delta = (K \times v_{ER} - v_a) - B (v_{na1} - v_{na2}) \qquad (1)$$

und Vergleichen der an den beiden Achsen gemessenen Differenzen wird während des Anfahrvorganges, wenn kein übermäßiger, die Antriebsschlupfregelung in Funktion setzender Schlupf auftritt, der Korrekturfaktor K bzw. K(t) "gelernt". "B" ist eine Kontante, deren Wert hier "1" beträgt; der Wert liegt allgemein zwischen 0,3 und 1,0. Ist das Ergebnis dieser Differenzenbildung gemäß Beziehung (1) größer oder gleich null, wird K(t) nach der Zeitspanne $T_1$ um den Faktor $k_1$ korrigiert, oder anders ausgedrückt,

wenn

$\Delta \geq 0$, dann wird $K(t) = K(t - T_1) - k_1$,

Entsprechend gilt:

$\Delta < 0$, dann wird $K(t) = K(t - T_2) + k_2$.

Zweckmäßigerweise werden gleiche Korrekturintervalle $T = T_1 = T_2$ und gleiche Korrekturkonstanten $k = k_1 = k_2$ gewählt. In einem Ausführungsbeispiel wurde für das Korrekturintervall T eine Zeitspanne von 50 bis 100 ms und für den Korrekturwert k ein Wert, im Bereich zwischen k = 0,005 und k = 0,01 gewählt.

Aus dem Diagramm nach Figur 1 ist zu erkennen, daß das Ersatzrad zum Zeitpunkt $t_2$ die Schlupfschwelle S erreichen würde, wenn keine Korrektur der Geschwindigkeit $v_{ER}$ vorgenommen würde. Die Regelungslogik würde also zum Zeitpunkt $t_2$ fälschlicherweise das Vorliegen eines zu hohen Antriebsschlupfes signalisieren und Bremsdruck in die Radbremse des betreffenden Rades einsteuern, um diesen scheinbaren Antriebsschlupf zu reduzieren. Eine solche unerwünschte Reaktion des Antriebsschlupfregelungssystems wird erfindungsgemäß durch eine Schaltungsanordnung verhindert, die einen Korrekturfaktor K(t) ermittelt und mit diesem die an dem Ersatzrad gemessene Drehgeschwindigkeit nach der vorgenannten Beziehung (1) bewertet. Spätestens ab dem Zeitpunkt $t_1$ ist die erhöhte Geschwindigkeit des kleineren Ersatzrades oder Notrades so weit kompensiert, daß die Schlupfschwelle S unverändert auch zur Beurteilung des Drehverhaltens dieses Ersatzrades geeignet ist, so daß (zu einem späteren Zeitpunkt) eine Antriebsschlupfregelung an dem Ersatzrad tatsächlich erst zu dem gewünschten Zeitpunkt bzw. erst nach dem Überschreiten eines vorgegebenen Antriebsschlupfwertes einsetzt.

Figur 2 bezieht sich auf eine Situation, in der vor dem Aktivieren der Antriebsschlupfregelung nicht genügend Zeit zum "Erlernen" des Korrekturfaktors K(t) bzw. zum Anpassen der Schaltung an das Ersatzrad in der an Hand der Figur 1 beschriebenen Weise zur Verfügung steht. Beispielsweise kann beim Anfahren auf Glatteis - $\mu_{low}$homogen - sehr schnell die Schlupfschwelle S erreicht und überschritten werden. Dies zeigt der linke Bereich des Diagramms nach Figur 2. Der Geschwindigkeitsverlauf $v_a$ des angetriebenen Normalrades ebenso wie der Geschwindigkeitsverlauf $v_{ER}$ des Ersatzrades, dessen Durchmesser auch in diesem Beispiel 80 % des Normalrad-Durchmessers beträgt, zeigen typisches Regelverhalten.

Die "Irritierung" der Regelung durch den kleineren Durchmesser des Ersatzrades macht sich in vorliegendem Fall nach dem Zeitpunkt $t_6$ störend bemerkbar. Das Fahrzeug bzw. die angetriebenen Räder gelangen nämlich nach $t_6$ in einem Bereich hohen Reibbeiwertes, bezeichnet in Figur 2 mit $\mu_{high}$homogen. Die Geschwindigkeit $v_a$ des angetriebenen Normalrades unterschreitet zum Zeitpunkt $t_6$ die Schlupfschwelle und bleibt anschließend im stabilen Bereich. $v_a$ nähert sich der Geschwindigkeit $v_{na}$ der nicht angetriebenen Räder. Die (nicht korrigierte) Geschwindigkeit $v_{ER}$ des Ersatzrades stabilisiert sich jedoch infolge des kleineren Durchmessers auf einen Wert oberhalb der für die Normalradgröße festgelegten Schlupfschwelle S. Dies hätte wiederum eine unerwünschte Bremsdruckeinsteuerung zur Folge. Dieser Zustand wird von der erfindungsgemäßen Schaltungsanordnung durch das Ausbleiben von Bremsdruckabbausignalen an dem Ersatzrad erkannt. Diese Situation liegt nach der Zeitspanne $T_A$, also nach $t_7$ vor. $T_A$ beträgt z.B. ungefähr 1 s. Folglich erhöht der Regler ab $t_7$ die Schlupfschwelle S solange, bis Bremsdruckabbausignale an dem Ersatzrad auftreten. Dies ist nach Figur 2 zum Zeitpunkt $t_8$ der Fall. Nach $t_8$ bleibt die Schlupfschwelle S' zunächst auf dem höheren Wert konstant und wird, wenn nach Ablauf einer bestimmten Zeitspanne $T_E$ von z. B.

200 bis 400 ms nach dem ersten Einsetzen der Druckabbaupulse kein erneuter Druckaufbau erforderlich wird, wieder abgesenkt. Nach dieser Zeitspanne $T_E$ bzw. zum Zeitpunkt $t_9$ hat der Regler erkannt, daß die Antriebsschlupfregelung beendet ist und leitet eine relativ langsame Erniedrigung der Schlupfschwelle s' auf den ursprünglichen Normalwert s ein. Da in diesem Beispiel nunmehr eine Phase mit inaktivierter Antriebsschlupfregelung folgt, setzt der anhand der Figur 1 beschriebene "Lernprozeß" ein. Die gestrichelte Kennlinie $v_{ER}$ symbolisiert diesen Radverlauf. In dieser Lernphase wird wie beschrieben die Geschwindigkeit $v_{ER}$ des Ersatzrades durch den Korrekturfaktor K(t) soweit erniedrigt, daß die normale Schlupfschwelle s auch für das Ersatzrad maßgebend wird.

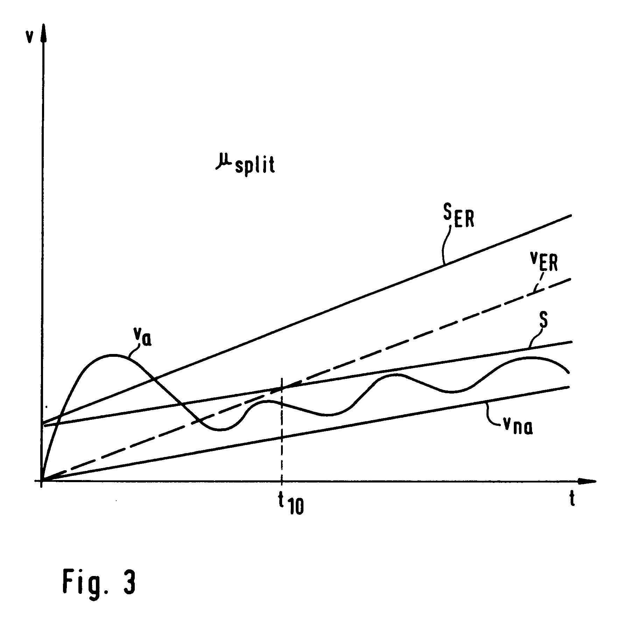

Auf eine weitere Situation, in der ein kleineres Ersatzrad ohne Hilfe der erfindungsgemäßen Schaltungsanordnung das Antriebsschlupfregelungssystem stören oder außer Funktion setzen würde, bezieht sich Figur 3. In diesem Fall ist während des Anfahrvorganges der Reibbeiwert an den beiden angetriebenen Rädern einer Achse sehr unterschiedlich. Es herrscht $\mu$-split. Das Ersatzrad mit dem kleineren Durchmesser ist auf der Seite des höheren Reibbeiwertes montiert. Die Geschwindigkeit $v_{na}$ des nicht angetriebenen Rades, welche die Fahrzeuggeschwindigkeit wiedergibt, die durch die Antriebsschlupfregelung beeinflußte Geschwindigkeit $v_a$ des angetriebenen Normalrades, die Geschwindigkeit $v_{ER}$ des stabil laufenden Ersatzrades und die Schlupfschwelle S sind in Figur 3 dargestellt.

Zum Zeitpunkt $t_{10}$ überschreitet die Geschwindigkeit $v_{ER}$ des Ersatzrades die Schlupfschwelle S. Dies hätte eine Bremsdruckeinsteuerung in die Radbremse des stabil auf hohem Reibbeiwert laufenden Ersatzrades zur Folge. Erfindungsgemäß wird jedoch in einem solchen Fall die normale Schlupfschwelle S für das auf dem höheren Reibbeiwert laufende Ersatzrad auf die Schlupfschwelle $S_{ER}$ angehoben. Die Differenz zwischen der normalen Schlupfschwelle S und der Schlupfschwelle $S_{ER}$ des Ersatzrades gleicht dem Unterschied der Drehgeschwindigkeiten zwischen dem normalen Rad und dem kleineren Ersatzrad soweit aus, daß in der hier beschriebenen Situation eine Bremsdruckeinsteuerung in die Radbremse des Ersatzrades verhindert wird und eine Antriebsschlupfregelung nur an dem auf geringen Reibbeiwert laufenden Rad $v_a$ erfolgen kann.

Auch in diesem Fall setzt später, nach Beendigung des Antriebsschlupfregelungsvorganges, eine Korrektur durch die anhand der Figur 1 beschriebene Schaltungsanordnung ein, worauf dann wiederum für beide angetriebenen Räder die gleiche Schwupfschwelle gelten kann.

## Patentansprüche

1. Schaltungsanordnung zur Aufrechterhaltung oder Verbesserung der Regelfunktion bei einem montierten kleineren Ersatzrad anstelle eines angetriebenen Normalrades, für ein Antriebsschlupfregelungssystem mit Bremsen- und/oder Motoreingriff für Kraftfahrzeuge, bei dem zur Ermittlung des Antriebsschlupfes die Drehgeschwindigkeit der angetriebenen Räder mit der Fahrzeuggeschwindigkeit oder einer entsprechenden Meßgröße verglichen wird, bei dem aus den bei stabilem Raddrehverhalten gemessenen Drehgeschwindigkeiten ein Korrekturfaktor gewonnen wird und bei dem die Antriebsschlupfregelung ausgelöst wird, wenn der Radschlupf einen vorgegebenen Grenzwert, nämlich die sogenannte Schlupfschwelle, überschreitet, dadurch **gekennzeichnet**, daß der Korrekturfaktor ($K(t)$) durch die Ermittlung einer Drehzahldifferenz aus dem Vergleich der Drehgeschwindigkeiten ($v_{na1}$, $v_{na2}$; $v_a$, $v_{ER}$) der beiden Räder der angetriebenen und der nicht angetriebenen Achsen und durch Vergleich dieser Drehzahldifferenzen ermittelt wird, wobei die an dem Ersatzrad gemessene Drehgeschwindigkeit ($V_{ER}$) durch den Korrekturfaktor ($K(t)$) bewertet und dadurch dem Drehgeschwindigkeitsmeßwert ($v_a$) des zweiten angetriebenen Rades derselben Achse derart angepaßt wird, daß für das Ersatzrad die gleiche Schlupfschwelle ($S$) für die Antriebsschlupfregelung maßgebend wird wie für ein Normalrad.

2. Schaltungsanordnung nach Anspruch 1, dadurch **gekennzeichnet**, daß der Korrekturfaktor ($K(t)$) während des Anfahrens des Fahrzeugs und/oder bei normaler Fahrt und nicht aktivierter Antriebsschlupfregelung ermittelt wird.

3. Schaltungsanordnung nach Anspruch 1 oder 2, dadurch **gekennzeichnet**, daß der Korrekturfaktor ($K(t)$) durch schrittweise Anpassung bzw. Reduzierung der Differenzen bei Einbeziehung des Korrekturfaktors ($K(t)$) ermittelt wird.

4. Schaltungsanordnung nach Anspruch 1, dadurch **gekennzeichnet**, daß der Korrekturfaktor ($K(t)$) nach der Bezeichnung

$$\Delta = (K \times v_{ER} - v_a) - B (v_{na1} - v_{na2})$$

ermittelt wird, wobei B eine Konstante ist, die in der Größenordnung von 0,3 bis 1,0 liegt.

5. Schaltungsanordnung nach Anspruch 4, dadurch **gekennzeichnet**, daß der Korrekturfaktor ($K(t)$) in vorgegebenen Zeitintervallen ($T$) um einen bestimmten Betrag ($k$) verringert bzw. erhöht wird, wenn die nach dieser Beziehung (1) gebildete Differenz größer oder gleich null bzw. kleiner null ist, d.h. wenn

$$\Delta \geqq 0, \text{ dann wird } K (t) = K (t - T_1) - k_1,$$

wenn

$$\Delta < 0, \text{ dann wird } K (t) = K (t - T_2) + K_2.$$

6. Schaltungsanordnung nach Anspruch 4 oder 5, dadurch **gekennzeichnet,** daß in gleichen Intervallen ($T = T_1 = T_2$) der Korrekturfaktor $K(t)$ um einen gleichen Betrag

$$k = k_1 = k_2$$

verringert bzw. erhöht wird.

7. Schaltungsanordnung nach Anspruch 6, dadurch **gekennzeichnet**, daß die Korrekturintervalle ($T$, $T_1$, $T_2$) in der Größenordnung von 10 bis 100 ms und die Korrekturfaktoren ($K(t)$) auf einen Bereich in der Größenordnung von 0,8 bis 1,0% begrenzt sind.

8. Schaltungsanordnung zur Aufrechterhaltung oder Verbesserung der Regelfunktion bei einem montierten kleineren Ersatzrad anstelle eines angetriebenen Normalrades, für ein Antriebsschlupfregelungssystem mit Bremsen- und/oder Motoreingriff für Kraftfahrzeuge, bei dem zur Ermittlung des Antriebsschlupfes die Drehgeschwindigkeit der angetriebenen Räder mit der Fahrzeuggeschwindigkeit oder einer entsprechenden Meßgröße verglichen werden und bei dem die Antriebsschlupfregelung ausgelöst wird, wenn der Radschlupf einen vorgegebenen Grenzwert, nämlich die sogenannte Schlupfschwelle, überschreitet, dadurch **gekennzeichnet**, daß beim Einsetzen der Antriebsschlupfregelung während eines Anfahrvorganges zunächst für die Regelung der beiden angetriebenen Räder die gleiche Schlupfschwelle ($S$) maßgebend ist und daß, wenn während eines Antriebsschlupfregelvorganges über eine vorgegebene Zeitspanne ($T_A$) hinaus an einem angetriebenen Rad Druckabbausignale ausbleiben, die <u>für dieses Rad maßgebende</u> Schlupfschwelle ($S$, $S'$) solange angehoben wird, bis der Druckabbau einsetzt.

9. Schaltungsanordnung nach Anspruch 8, dadurch **gekennzeichnet**, daß die vorgegebene Zeitspanne ($T_A$), die das Anheben der Schlupfschwelle ($S$) auslöst, in einer Größenordnung zwischen 0,5 und 1,5 s liegt.

10. Schaltungsanordnung nach Anspruch 8 oder 9, dadurch **gekennzeichnet**, daß eine Zeitspanne ($T_E$) in der Größenordnung von 200 bis 500 ms, in der nur Bremsdruckabbau erfolgt, als Kriterium für Beendigung eines Antriebsschlupfregelvorganges gewertet wird.

11. Schaltungsanordnung nach einem der Ansprüche 8 bis 10, dadurch **gekennzeichnet,** daß nach Beendigung des Antriebsschlupfregelvorganges die Schlupfschwelle (S) schrittweise oder kontinuierlich auf die normale Schlupfschwelle (S) erniedrigt wird.

12. Schaltungsanordnung zur Aufrechterhaltung oder Verbesserung der Regelfunktion bei einem montierten kleineren Ersatzrad anstelle eines angetriebenen Normalrades, für ein Antriebsschlupfregelungssystem mit Bremsen- und/oder Motoreingriff für Kraftfahrzeuge, bei dem zur Ermittlung des Antriebsschlupfes die Drehgeschwindigkeit der angetriebenen Räder mit der Fahrzeuggeschwindigkeit oder einer entsprechenden Meßgröße verglichen werden und bei dem die Antriebsschlupfregelung ausgelöst wird, wenn der Radschlupf einen vorgegebenen Grenzwert, nämlich die sogenannte Schlupfschwelle, überschreitet, dadurch **gekennzeichnet**, daß beim Instabilwerden bzw. Überdrehen eines angetriebenen Rades während eines Anfahrvorganges die für das andere angetriebene Rad maßgebliche Schlupfschwelle ($S_{ER}$) mit begrenzter Steigung bis zu einem Betrag, der der Abweichung der Drehgeschwindigkeit des nichtüberdrehenden Antriebsrades von der Drehgeschwindigkeit der nichtangetriebenen Räder entspricht, angehoben wird.

13. Schaltungsanordnung nach Anspruch 12, **gekennzeichnet** durch die Kombination mit der Schaltungsanordnung nach einem oder mehreren der Ansprüche 1 bis 7 und/oder mit der Schaltungsanordnung nach einem oder mehreren der Ansprüche 8 bis 11.

**Claims**

1. A circuit configuration for maintaining or improving the control function for a traction slip control system with brake and/or engine management for automotive vehicles when a smaller spare wheel has been mounted instead of a driven normal wheel, wherein the rotating speed of the driven wheels is compared with the vehicle speed or with a corresponding measurement parameter for the purpose of detecting the traction slip, wherein a correction factor is obtained from the rotating speeds measured with stable rotational behaviour of the wheels, and wherein traction slip control is triggered when the wheel slip exceeds a predetermined limit value, namely the so-called slip threshold, **characterized** in that the correction factor ($K(t)$) is found by determining a rotating speed difference from the comparison of the rotating speeds ($v_{na1}$, $V_{na2}$; $v_a$, $v_{ER}$) of the two wheels of the driven and the non-driven axles and by comparing the speed differences, the rotating speed ($V_{ER}$) measured at the spare wheel being evaluated by means of the correction factor ($K(t)$) and being thereby adapted to the measured value of the rotating speed ($v_a$) of the second driven wheel of the same axle so that the slip threshold (S), decisive for traction slip control, will become the same for the spare wheel as for a normal wheel.

2. A circuit configuration as claimed in claim 1, **characterized** in that the correction factor ($K(t)$) is determined during the start of the vehicle and/or during normal driving, with traction slip control not being activated.

3. A circuit configuration as claimed in claim 1 or in claim 2, **characterized** in that the correction factor ($K(t)$) is determined by stepwise adaptation or reduction of the differences, with the correction factor ($K(t)$) included.

4. A circuit configuration as claimed in claim 1, **characterized** in that the correction factor ($K(t)$) is determined in accordance with the relationship

$$\Delta = (K \times V_{ER} - v_a) - B (v_{na1} - v_{na2}),$$

with B being a constant lying in the order of magnitude ranging from 0.3 to 1.0.

5. A circuit configuration as claimed in claim 4, **characterized** in that the correction factor ($K(t)$) is reduced or raised by a certain amount (k) at predetermined time intervals (T) if the difference formed in accordance with this relationship (1) respectively exceeds zero, equals zero or is smaller than zero, i.e., if

$$\Delta \geq 0, \text{ then } K(t) = K(t - T_1) - k_1;$$

if

$$\Delta < 0, \text{ then } K(t) = K(t - T_2) + k_2.$$

6. A circuit configuration as claimed in claim 4 or in claim 5,
**characterized** in that, in case of identical intervals (T = $T_1$ = $T_2$), the correction factor K (t) is respectively reduced or raised by an identical amount k = $k_1$ = $k_2$.

7. A circuit configuration as claimed in claim 6,
**characterized** in that the correction intervals (T, $T_1$, $T_2$) are chosen to lie in the order of magnitude ranging from 10 msec to 100 msec and the correction factors (K(t)) are limited to a range lying in the order of magnitude from 0.8 to 1.0 %.

8. A circuit configuration for maintaining or improving the control function for a traction slip control system with brake and/or engine management for automotive vehicles when a smaller spare wheel has been mounted instead of a driven normal wheel, wherein the rotating speed of the driven wheels is compared with the vehicle speed or with a corresponding measurement parameter for the purpose of detecting the traction slip, and wherein traction slip control is triggered when the wheel slip exceeds a predetermined limit value, namely the so-called slip threshold,
**characterized** in that, at first, the same slip threshold (S) is decisive for the control of the two driven wheels upon the onset of traction slip control during a starting operation, and in that if, during a traction slip control operation, pressure reduction signals fail to appear at a driven wheel after a predetermined period of time ($T_A$), the slip threshold (S, S'), decisive for this wheel, is raised until pressure reduction commences.

9. A circuit configuration as claimed in claim 8,
**characterized** in that the predetermined period of time ($T_A$) triggering the rise of the slip threshold (S) lies in an order of magnitude ranging between 0.5 and 1.5 sec.

10. A circuit configuration as claimed in claim 8 or in claim 9,
**characterized** in that a period of time ($T_E$) of the order of magnitude ranging from 200 msec to 500 msec, in which only braking pressure reduction takes place, is taken as a criterion of completion of a traction slip control operation.

11. A circuit configuration as claimed in any one of claims 8 through 10,
**characterized** in that the slip threshold (S) is stepwise or continuously lowered to the normal slip threshold (S) after the traction slip control operation has been completed.

12. A circuit configuration for maintaining or improving the control function for a traction slip control system with brake and/or engine management for automotive vehicles when a smaller spare wheel has been mounted instead of a driven normal wheel, wherein the rotating speed of the driven wheels is compared with the vehicle speed or with a corresponding measurement parameter for the purpose of detecting the traction slip, and wherein traction slip control is triggered when the wheel slip exceeds a predetermined limit value, namely the so-called slip threshold,
**characterized** in that, upon the instabilization or, rather, upon spinning of a driven wheel during a starting operation, the slip threshold ($S_{ER}$), decisive for the other driven wheel, is raised with a limited gradient up to an amount which corresponds to the deviation of the rotating speed of the non-spinning driven wheel from the rotating speed of the non-driven wheels.

13. A circuit configuration as claimed in claim 12,
**characterized** by its combination with the circuit configuration as claimed in one or in several of claims 1 through 7 and/or with the circuit configuration as claimed in one or in several of claims 8 through 11.

**Revendications**

1. Agencement de circuit servant à maintenir ou améliorer la fonction de régulation dans le cas où une roue de rechange plus petite est montée à la place d'une roue motrice normale, pour système de régulation du glissement de traction à intervention du frein et/ou intervention du moteur, pour véhicule automobile, dans lequel, pour la détermination du glissement de traction, la vitesse de rotation des roues motrices est comparée à la vitesse du véhicule ou à une grandeur mesurée correspondante, dans lequel un facteur de correction est déduit des vitesses de rotation mesurées dans le cas d'un comportement stable des roues et dans lequel la régulation du glissement de traction est déclenchée lorsque le glissement de roue franchit, vers le haut, une valeur limite préfixée, à savoir ce qu'il est convenu d'appeler le seuil de glissement, caractérisé en ce que le facteur de correction (K(t)) est déterminé au moyen de la détermination d'une différence de vitesse de rotation par comparaison des vitesses de rotation ($v_{na1}$, $v_{na2}$ ; $v_a$, $v_{ER}$) des deux roues de l'essieu moteur et de l'essieu non moteur et par comparaison de ces différences de vitesse de rotation et en ce que la vitesse de rotation $v_{ER}$ mesurée sur la roue de rechange est pondérée au moyen du facteur de correction $(K(t))$ et est de ce fait afaptée à la valeur mesurée de vitesse de rotation $(v_a)$ de la seconde roue motrice d'une façon telle que, pour la roue de rechange, c'est le même seuil de glissement (S) que pour une roue normale qui est valable pour la régulation du glissement de traction.

2. Agencement de circuit selon la revendication 1, caractérisé en ce que le facteur de correction $(K(t))$ est déterminé au cours du démarrage du véhicule et/ou lors d'un déplacement normal du véhicule alors que la régulation du glissement de traction n'est pas activée.

3. Agencement de circuit selon l'une des revendications 1 et 2, caractérisé en ce que le facteur de correction $(K(t))$ est déterminé au moyen d'une adaptation pas à pas ou une réduction des différences lors d'une mise en service du facteur de correction $(K(t))$.

4. Agencement de circuit selon la revendication 1, caractérisé en ce que le facteur de correction $(K('t))$ est déterminé suivant la relation :

$$D = (K \times v_{ER} - v_a) - B (v_{na1} - v_{na2})$$

dans laquelle B est une constante qui est de l'ordre de grandeur de 0,3 à 1,0.

5. Agencement de circuit selon la revendication 4, caractérisé en ce qu'à intervalles de temps réguliers, le facteur de correction $(K(t))$ est diminué ou augmenté d'une valeur (k) déterminée, si la différence formée suivant la relation (1) est supérieure ou égale à zéro, ce qui signifie que :

lorsque $D \geq 0$, il vient alors $K(t) = K(t - T_1) - k_1$
et lorsque $D < 0$, il vient alors $K(t) = K(t - T_2) + k_2$.

6. Agencement de circuit selon l'une des revendications 4 et 5, caractérisé en ce qu'à des intervalles identiques $(T = T_1 = T_2)$, le facteur de correction $(K(t))$ est diminué ou augmenté d'une valeur identique :

$$k = k_1 = k_2.$$

7. Agencement de circuit selon la revendication 6, caractérisé en ce que les intervalles de correction $(T, T_1, T_2)$ sont de l'ordre de grandeur de 10 à 100 ms et les facteurs de correction $(K(t))$ sont limités à un domaine de l'ordre de grandeur de 0,8 à 1,0%.

8. Agencement de circuit servant à maintenir ou améliorer la fonction de régulation dans le cas où une roue de rechange plus petite est montée à la place d'une roue motrice normale, pour système de régulation du glissement de traction à intervention du frein et/ou intervention du moteur, pour véhicule automobile, dans lequel, pour la détermination du glissement de traction, la vitesse de rotation des roues motrices est comparée à la vitesse du véhicule ou à une grandeur mesurée correspondante et dans lequel la régulation du glissement de traction est déclenchée lorsque le glissement de roue franchit, vers le haut, une valeur limite préfixée, à savoir ce qu'il est convenu d'appeler le seuil de glissement, caractérisé en ce que, lors de la mise en service de la régulation du glissement de traction au cours d'une opération de démarrage, le même seuil de glissement (S) est d'abord valable pour la régulation des deux roues motrices et en ce que, si, au cours d'une opération de régulation du glissement de traction, des signaux de diminution de pression font défaut sur une roue motrice au-delà d'une période de temps préfixée $(T_A)$, le seuil de glissement (S, S') valable pour cette roue est relevé jusqu'à ce que la diminution de pression s'établisse.

9. Agencement de circuit selon la revendication 8, caractérisé en ce que la période de temps préfixée $(T_A)$ qui déclenche le relèvement du seuil de glissement (S) est de l'ordre de grandeur de 0,5 à 1,5 s.

10. Agencement de circuit selon l'une des revendications 8 et 9, caractérisé en ce qu'une période de temps $(T_E)$ de l'ordre de grandeur de 200 à 500 ms pendant laquelle il ne se produit qu'une diminution de pression est exploitée comme critère pour faire s'achever une opération de régulation du glissement de traction.

11. Agencement de circuit selon l'une des revendications 8 à 10, caractérisé en ce qu'après que l'opération de régulation du glissement de traction, le seuil de glissement (S) est abaissé pas à pas ou d'une manière continue jusqu'au seuil de glissement (S) normal.

12. Agencement de circuit servant à maintenir ou améliorer la fonction de régulation dans le cas où une roue de rechange plus petite est montée à la place d'une roue motrice normale, pour système de régulation du glissement de traction à intervention du frein et/ou intervention du moteur, pour véhicule automobile, dans lequel, pour la détermination du glissement de traction, la vitesse de rotation des roues motrices est comparée à la vitesse du véhicule ou à une grandeur mesurée correspondante et dans lequel la régulation du glissement de traction est déclenchée lorsque le glissement de roue franchit, vers le haut, une valeur limite préfixée, à savoir ce qu'il est convenu d'appeler le seuil de glissement, caractérisé en ce que, lorsqu'une roue motrice devient instable ou patine au cours d'une opération de démarrage, le seuil de glissement ($S_{ER}$) valable pour l'autre roue motrice est relevé, suivant une croissance limitée, jusqu'à une valeur qui correspond à l'écart de la vitesse de rotation de la roue motrice qui ne patine pas, vis-à-vis de la vitesse de rotation des roues non motrices.

13. Agencement selon la revendication 12, caractérisé par la combinaison avec l'agencement de circuit selon une ou plusieurs des revendications 1 à 7 et/ou avec l'agencement de circuit selon une ou plusieurs des revendications 8 à 11.

Fig.1

Fig. 2

Fig. 3